Europäisches Patentamt

European Patent Office

Office européen des brevets

(11) Publication number: **0 144 232**
**B1**

# EUROPEAN PATENT SPECIFICATION

(12)

(45) Date of publication of patent specification: **11.10.89**

(21) Application number: **84308384.1**

(22) Date of filing: **03.12.84**

(51) Int. Cl.⁴: **G 01 G 3/14,** G 01 G 13/00,
G 01 G 21/22, G 01 G 13/24

(54) Automatic weighing apparatus.

(30) Priority: **03.12.83 JP 228697/83**

(43) Date of publication of application:
**12.06.85 Bulletin 85/24**

(45) Publication of the grant of the patent:
**11.10.89 Bulletin 89/41**

(84) Designated Contracting States:
**DE FR GB IT NL**

(56) References cited:
EP-A-0 072 707
DE-A-1 800 688
DE-A-2 906 669
DE-A-3 205 799
FR-A-2 492 095
GB-A-2 003 284

(73) Proprietor: **KABUSHIKI KAISHA ISHIDA KOKI
SEISAKUSHO**
**44, Shogoin Sannou-cho Sakyo-ku
Kyoto-shi Kyoto 606 (JP)**

(72) Inventor: **Tokutsu, Harunori
Rune Ohtsu 11-409 2, 2-chome, Nionohama
Ohtsu-shi Shiga (JP)**

(74) Representative: **Fane, Christopher Robin King
et al
HASELTINE LAKE & CO. Hazlitt House 28
Southampton Buildings Chancery Lane
London, WC2A 1AT (GB)**

Courier Press, Leamington Spa, England.

## Description

This invention relates to an automatic weighing apparatus having a plurality of weighing machines.

An automatic weighing apparatus now in practical use operates by supplying articles to a plurality of weighing machines, computing combinations of weight values obtained from the weighing machines, selecting a combination of the weight values the sum total whereof is equal to a predetermined fixed weight, and discharging only the articles contained in the weighing machines corresponding to the selected combination (referred to as the "optimum combination"), whereby there is obtained a batch of the articles the weight whereof is equal or closest to the fixed weight.

Each weighing machine in an automatic weighing apparatus of the above type is composed of a weighing hopper in which the articles to be weighed are introduced, and a load sensor coupled to the weighing hopper. The load sensor generally makes use of a load cell utilizing strain gauges and is so adapted that the weight of the articles introduced into the weighing hopper is delivered as an output in the form of an electric signal. Such a weighing apparatus is described in more detail in EP-A-0 072 707.

The output signal of the load cell is of extremely small magnitude, and the present applicants have found that it is sometimes adversely affected to a significant degree by electrical noise signals produced by external radio waves. Thus the weighing hopper can act as an antenna with respect to external radio waves, and noise signals accordingly induced in the weighing hopper by such radio waves can be conducted to the load cell, thereby increasing the unwanted noise component in the output signal of the load cell. The end result is a weighing error.

Another source of weighing error has been found to stem from the fact that the weighing hopper may, depending upon the nature of the articles being weighed, develop a large amount of static electricity owing to friction between the articles and the weighing hopper when the articles are introduced into or discharged from the hopper. If no definite discharge path is provided, this static electricity may build up on the weighing hopper until the hopper is charged to a high voltage. Though this static electricity will eventually discharge spontaneously to a location where the surrounding potential is low, noise ascribable to such discharge may be introduced into the output signal of the load sensor when such discharge occurs. In addition, such discharge could damage a DC amplifier employed to amplify the load cell signal.

According to the present invention there is provided an automatic weighing apparatus having a plurality of weighing machines each of which comprises a weighing hopper supported by a load sensor for providing a measure of the weight of articles contained in the hopper when the apparatus is in use, the weighing hoppers having respective outlet gates which can be opened selectively, to release the contents of selected hoppers, by operation of respective gate actuating devices of the apparatus, each of which devices has a push rod for contacting a portion of the associated hopper in the course of operation of the device concerned, characterised in that each of the said weighing machines has interposed between its hopper and its load sensor an electrically insulating member for inhibiting the passage to the load sensor of radio-frequency electrical noise signals that may be induced in the hopper, and in that the said portion of each hopper is metallic, and in that the said push rod of each of the said gate actuating devices is constructed and connected so that its contact with the said portion of the associated hopper in the course of the said operation provides a temporary electrical grounding connection to that hopper.

Reference will now be made, by way of example, to the accompanying drawings, in which:

Fig. 1 shows an axial sectional view of an automatic weighing apparatus in which the present invention is to be embodied;

Fig. 2 shows to a larger scale a sectional front view of part of the weighing apparatus of Fig. 1, which part is constructed in accordance with one characterising feature of the present invention;

Fig. 3 shows a sectional side view taken along line III-III of Fig. 2;

Fig. 4 shows a side view of parts of the apparatus of Fig. 1, drawn to a larger scale, modified to embody the present invention; and

Fig. 5 shows a detail of a modified form of the apparatus according to Fig. 4.

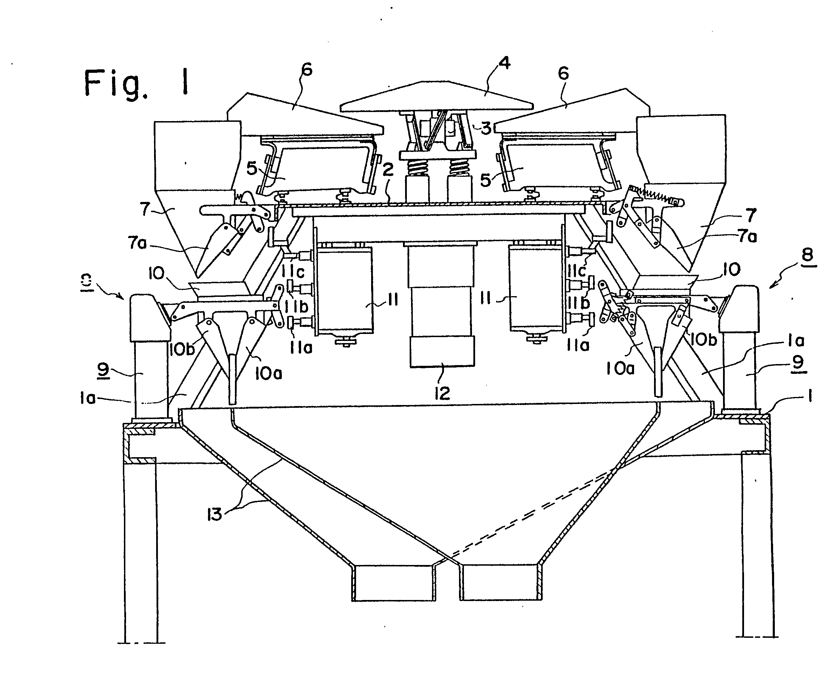

The automatic weighing apparatus of Figures 1 to 3 has a base 1 above which a platform 2 is supported by a plurality of support legs 1a. Disposed at the central portion of the platform 2 is a dispersing table 4 supported by a vibrating device 3 arranged on the platform 2. Disposed radially along the perimeter of the dispersing table 4 are a plurality of supply troughs 6. Each supply trough 6 is supported on the platform 2 by a corresponding vibrating device 5. Disposed below the ends of the supply troughs 6 are pool hoppers 7 each of which corresponds to one of the troughs 6. Each pool hopper 7 is attached to the outer circumferential portion of the platform 2. A plurality of weighing machines 8 arrayed in a circle are disposed below corresponding ones of the pool hoppers 7. Each weighing machine 8 is mounted on the base 1 and comprises a main body 9 incorporating a load sensor, and a weighing hopper 10 mounted on the main body 9. Each weighing hopper 10 is provided with an inwardly opening gate 10a and an outwardly opening gate 10b in the illustrated embodiment.

A plurality of gate actuating devices 11 are attached to and depend from the lower side of the platform 2. Each gate actuating device 11 corresponds to one cooperating set of the pool hoppers 7 and weighing hoppers 10. Each gate actuating device 11 is adapted so as to be operated by a motor 12 mounted on the lower side of the platform 2. When a command to discharge weighed articles is received from a computation control unit, not shown, the gate actuating device 11 thrusts push rods 11a, 11b, 11c outwardly of the device to open the gates 10b, 10a of the corresponding weighing hopper 10 and a gate 7a of the pool hopper 7.

Collecting chutes 13 are disposed beneath the weighing hoppers 10. In the illustrated embodiment, the collecting chutes 13 are equipped with two collecting routes, namely a route corresponding to the inwardly opening gates 10a of the weighing hoppers 10, and a route corresponding to the outwardly opening gates 10b of the weighing hoppers 10.

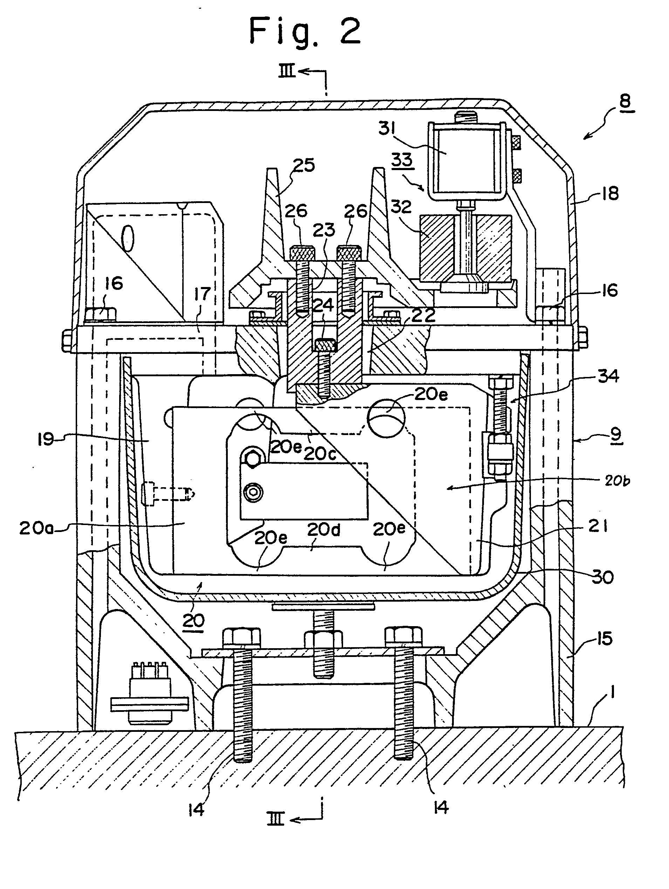

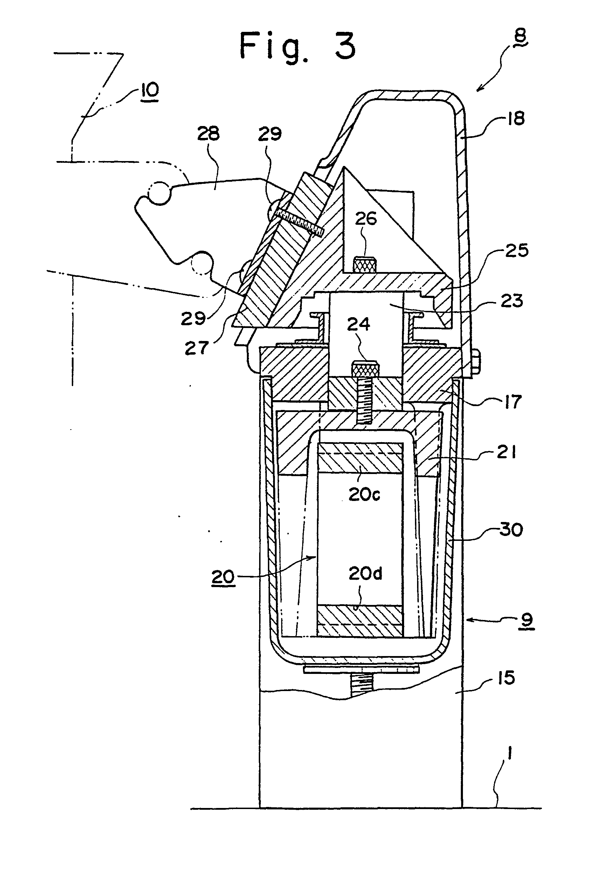

The construction of the weighing machine 8 will now be described in detail with reference to Figs. 2 and 3.

The main body 9 of the weighing machine 8 comprises a generally U-shaped base 15 secured to the base 1 by bolts 14, a ceiling plate 17 spanning the upper end portions of the base 15 and secured thereto by bolts 16, and a cover 18 covering the top of the ceiling plate 17. The main body 9 houses a load cell 20 serving as a load sensor and supported by a bracket 19 depending from the bottom side of the ceiling plate 17 at one edge thereof. The load cell 20 comprises a fixed end portion 20a connected to the bracket 19, a movable end portion 20b on the side opposite the fixed end portion 20a, and upper and lower beams 20c, 20d interconnecting the end portions 20a, 20b. The beams 20c, 20d have resilient portions 20e provided at two locations thereof. Bonded to the surface of each of the four resilient portions 20e is a strain gauge (not shown), giving a total of four strain gauges arranged to construct a bridge circuit. The load cell 20 has a movable bracket 21 fixedly provided on its movable end portion and is connected via the movable bracket 21, a support post 23, a junction member 25 and a spacer 27 to bracket 28 on which the weighing hopper 10 is mounted. The support post 23 penetrates a hole 22 provided at .the central portion of the ceiling plate 17 and has a lower end fixedly secured to the movable bracket 21 by a bolt 24, and an upper end connected to the junction member 25 by bolts 26. The weighing hopper mounting bracket 28 is attached to the junction member 25 by a bolt 29 via a spacer 27. The combined weight of the weighing hopper 10 and the articles within the weighing hopper thus acts upon the movable end portion of the load cell 20 via the mounting bracket 28, spacer 27, junction member 25, support post 23 and movable bracket 21. The load cell 20, which is thus arranged so that a load will act upon the movable end portion 20b thereof, senses the load electrically to cause an output signal to be produced by the aforementioned bridge circuit, which signal provides a measure of the load concerned. The output signal conforms to the amount of flexure of the flexible portions 20e experienced by the upper and lower beams 20c, 20d, tne amount of flexure corresponding in turn to the applied load.

In this apparatus, an insulating member consisting of synthetic resin or the like constitutes the support post 23, which supports the weighing hopper 10 via the weighing hopper mounting bracket 28, spacer 27 and junction member 25. The weighing hopper 10 and load cell 20 are thus electrically isolated from each other by means of the support post 23. It should be noted that the member formed of an insulator is not limited to the support post 23, for it will suffice if an insulator is used to construct any one of the mechanical members interconnecting the weighing hopper 10 and load cell 20, such as the weighing hopper mounting bracket 28, junction member 25, support post 23 and movable bracket 21. In other words, what is important is that the weighing hopper 10 and load cell 20 be electrically isolated from each other by way of insulation.

Further, in this apparatus, the load cell 20 is housed within the case 30 mounted on the lower side of the ceiling plate 17, and the arrangement is such that the load cell 20 is protected against water and humidity by a dehumidifying material (not shown) sealed so as not to contact the load cell. Numeral 33 denotes calibrating means disposed on the side portion of the junction member 25 and comprising a solenoid 31 and a weight 32 for applying a load to the junction member 25 when the solenoid is rendered conductive. Numeral 34 designates adjustable limit setting means mounted on the ceiling plate 17 for preventing excessive flexure of the load cell 20 by limiting displacement of the movable bracket 21 so as not to exceed a predetermined value.

The operation of the foregoing automatic weighing apparatus will now be described.

The articles to be weighed are fed dispersively from the dispersing table 4 to the weighing hoppers 10 via the troughs 6 and pool hoppers 7. The load of the articles in each weighing hopper 10 is applied to the movable end portion of the corresponding load cell 20 through the weighing hopper mounting bracket 28, spacer 27, junction member 25, support post 23 and movable bracket 21. The article batch in each weighing hopper 10 is thus weighed. The computation control unit, which is not shown, selects from the resulting weight values an optimum combination of weight values for obtaining a preselected target weight. The articles belonging to the selected combination are released into the underlying collecting chutes 13 by opening, by operation of actuating devices 11, the gates 10a or 10b of the weighing hoppers 10 corresponding to the selected combination. These articles are then supplied to a packaging apparatus (not shown) upon being collected in one of the collecting routes. Those weighing hoppers 10 that have discharged their articles are immediately resupplied for the next weighing cycle from the overlying pool hoppers 7 by opening the gates of these pool hoppers through operation of the corresponding gate actuating devices 11.

If the automatic weighing apparatus is installed at a location where there are strong radio waves, the weighing hoppers 10 of the respective weighing machines 8 act as antennae with respect to these radio waves. In the prior art, the weighing hoppers 10 transmit these radio waves to the load cells 20 serving as the load sensors, whereby noise is produced in the load cell output signals. In the apparatus of Figures 1 to 3, however, the support post 23 joining the weighing hopper 10 and load cell 20 of each weighing machine 8 is constituted by an insulating member, so that the hopper and cell are electrically insulated. Accordingly, radio waves picked up by the weighing hopper 10 are prevented from being conducted to the load cell 20. This prevents noise from this source from being introduced into the output of the load cell 20 and thus solves the problem of weighing errors resulting from radio waves.

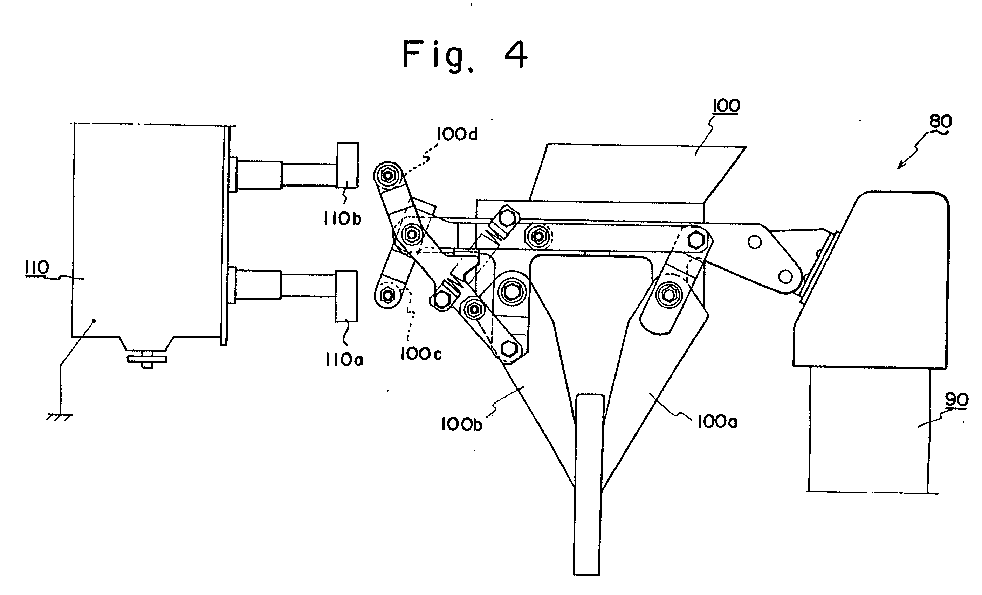

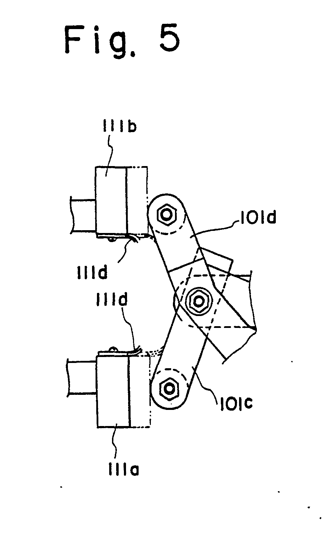

The construction of the automatic weighing apparatus of Figures 4 and 5, embodying the present invention, is basically similar to that of the apparatus of Figures 1 to 3, and in particular the weighing hopper and load sensor (load cell) of each weighing machine are electrically isolated from each other.

In the embodiment of Fig. 4, electrically conductive members form weighing hopper push rods 110a and 110b, of each gate actuating device 110, and operating members 100c and 100d of a gate actuating link mechanism of each weighing hopper 100. When the push rod 110a or 110b is brought into contact with the operating member 100c or 100d to open the gate 100a or 100b, the weighing hopper 100 and gate actuating device 110 are brought temporarily into electrically conductive connection with one another. Since each gate actuating device 110 is electrically grounded, the weighing hopper 100 will thus be grounded temporarily via the gate actuating device 110 concerned.

Since the weighing hopper 100 of a weighing machine 80 is isolated with respect to the load sensor of the weighing machine main body 90, static electricity may accumulate on the weighing hopper 100 as a result of friction between the weighing hopper and certain weighed articles when the articles are supplied or discharged. Such static electricity is not allowed to build up to a high voltage, however, because the weighing hopper 100 is grounded via the gate actuating device 110 whenever the associated gate actuating device is operated. The load sensors of this automatic weighing apparatus are thus protected from adverse effects of high-voltage static electricity build-up on the weighing hoppers 100. Though there is the possibility that static electricity which has accumulated on the weighing hopper 100 will discharge across the push rods 110a and 110b and operating members 100c and 100d immediately before the push rods and operating members make contact, the weighing operation performed by the load sensors of the automatic weighing apparatus will have already been completed by the time the aforesaid contact is made, that is, by the time the gates are opened. Accordingly, such discharge is unlikely to result in a weighing error.

Fig. 5 illustrates a modification of the Fig. 4 embodiment. In order to ground more reliably static electricity which has built up on the weighing hopper 100, brushes 111d are attached to push rods 111a and 111b of the gate actuating device, and the arrangement is such that the brushes 111d will contact the operating members 101c and 101d on the weighing hopper side when the gates are opened or closed.

## Claims

1. An automatic weighing apparatus having a plurality of weighing machines (80) each of which comprises a weighing hopper (100) supported by a load sensor (20) for providing a measure of the weight of articles contained in the hopper when the apparatus is in use, the weighing hoppers having respective outlet gates (100a) which can be opened selectively, to release the contents of selected hoppers, by operation of respective gate actuating devices (110) of the apparatus, each of which devices has a push rod (110a) for contacting a portion (100c) of the associated hopper in the course of operation of the device concerned, characterised in that each of the said weighing machines has interposed between its hopper (100) and its load sensor (20) an electrically insulating member (23) for inhibiting the passage to the load sensor of radio-frequency electrical noise signals that may be induced in the hopper, and in that the said portion (100c) of each hopper is metallic, and in that the said push rod (110a) of each of the said gate actuating devices is constructed and connected so that its contact with the said portion (100c) of the associated hopper in the course of the said operation provides a temporary electrical grounding connection to that hopper.

2. Apparatus as claimed in claim 1, wherein each of the said push rods (111a) has attached thereto an electrically conductive brush (111d) arranged to provide such a temporary connection with a gate actuating link mechanism of the associated hopper in the course of the said operation.

## Patentansprüche

1. Automatische Wägevorrichtung mit mehreren Wägemaschinen (80), von denen jede einen Wägebehälter (100) umfaßt, welcher von einem Lastsensor (20) gestützt wird, um bei Betrieb der Vorrichtung einen Meßwert des Gewichts der in dem Behälter enthaltenen Artikel zu liefern, wobei die Wägebehälter jeweilige Auslaßtore (100a) aufweisen, welche durch Betätigung jeweiliger Torbetätigungseinrichtungen (110) der Vorrichtung wahlweise zum Ausgeben des Inhaltes der ausgewählten Behälter geöffnet werden können, wobei jede der genannten Einrichtungen eine Stößelstange (110a) zum Berühren eines Bereichs (100c) des zugehörigen Behälters während der Betätigung der betreffenden Einrichtung aufweist, dadurch gekennzeichnet, daß jede der Wägemaschinen ein zwischen ihrem Behälter (100) und ihrem Lastsensor (20) angeordnetes elektrisch isolierendes Element (23) zum Sperren des Durchgangs etwa in den Behälter gelangender elektrischer Radio-Frequenz-Störsignale zum Lastsensor (20) aufweist, und daß der genannte Bereich (100c) jedes Behälters metallisch ist, und daß die Stößelstange (110a) einer jeden Torbetätigungseinrichtung derart ausgebildet und verbunden ist, daß ihr Kontakt mit dem genannten Bereich (100c) des zugehörigen Behälters im Verlauf des Vorganges eine temporäre Masseverbindung zu diesem Behälter bildet.

2. Vorrichtung nach Anspruch 1, bei der an jeder der Stößelstangen (111a) eine elektrisch leitende Bürste (111d) angebracht ist, die so angeordnet ist, daß sie die temporäre Verbindung mit einem Torbetätigungs-Lenkermechanismus des zugehörigen Behälters während des Ablaufs des Vorgangs bildet.

**Revendications**

1. Appareil automatique de pesage comportant une pluralité de machines de pesage (80) dont chacune comporte une trémie de pesage (100) supportée par un capteur de charge (20) afin d'établir une mesure du poids des articles contenus dans la trémie quand l'appareil est en service, les trémies de pesage ayant des portes respectives de sortie (100a) qui peuvent être ouvertes de manière sélective, afin de libérer le contenu de trémies sélectionnées, par le fonctionnement de dispositifs respectifs (110) d'actionnement de porte de l'appareil, chacun de ces dispositifs d'actionnement comporte une tige-poussoir (110a) qui vient en contact avec une partie (100c) de la trémie associée au cours du fonctionnement du dispositif concerné, caractérisé par le fait que chacune desdites machines de pesage comporte, interposé entre sa trémie (100) et son capteur de charge (20), un élément électriquement isolant (23) pour empêcher le passage vers le capteur de charge des signaux de bruit électriques en radiofréquence qui sont susceptibles d'être induits dans la trémie, et par le fait que ladite partie (100c) de chaque trémie est métallique, et par le fait que ladite tige-poussoir (110a) de chacun desdits dispositifs d'actionnement de porte est construite et montée de façon que son contact avec ladite partie (100c) de la trémie associée au cours dudit fonctionnement établisse une connexion électrique provisoire de mise à la masse avec cette trémie.

2. Appareil selon la revendication 1, dans lequel chacune desdites tiges-poussoirs (111a) est connectée à un balai électriquement conducteur (111d) agencé pour assurer cette connexion provisoire avec un mécanisme de tringlerie actionnant une porte de la trémie associée au cours de ladite opération.

Fig. I

# Fig. 2

# Fig. 3

Fig. 4

# Fig. 5